# EUROPEAN PATENT APPLICATION

(11) **EP 3 481 078 A1**
(43) Date of publication of application: **08.05.2019**
(21) Application number: 17199651.5
(22) Date of filing: 02.11.2017
(51) Int. Cl.: H04Q 1/02

(54) **PATCH MANAGEMENT DEVICE**

(71) Applicant: 3M Innovative Properties Company, Saint Paul, MN 55133-3427 (US)
(72) Inventor: Schrix, Lars, 47228 Duisburg (DE); Orda, Peter Reinhard, 42855 Remscheid (DE)
(74) Representative: Müller, Bruno

(57) **Abstract**

Patch management device (3) for managing cable ports of communications patch panels (50), in which the cable ports comprise visible port identifiers. Each patch panel comprises at least one fixed cable tag reader for contactlessly reading a cable tag (80) arranged at a cable end (90) of a patch cable (100) received in a cable port of the patch panel.

The patch management device comprises
a) a stationary patch management apparatus (11), connectable to the fixed cable tag reader(s) of the patch panel(s) (50), and
b) a remote cable tag reader (22), connectable to the stationary patch management apparatus (11) and comprising a display unit (130) and a probe head (140) to contactlessly read cable tags.

The patch management device can indicate, via the display unit, a visible port identifier of a target cable port which is to receive the cable end, the cable tag of which cable end has been read by the probe head.

## Description

This disclosure relates to patch management systems which facilitate manual patching of communication network patch cables between cable ports of patch panels, and to methods of using such systems.

Patch cables are used for transmitting voice and data signals in fiber-optic or electrical communication networks where a number of incoming communication lines need to be temporarily connected to a number of outgoing communication lines. Typically, incoming communication lines are terminated in one patch panel forming an array of "incoming" ports, while outgoing communication lines are terminated in another patch panel forming an array of "outgoing" ports. One of the incoming ports is connected with one of the outgoing ports by a patch cable. Data centres, patching cabinets or patching rooms often accommodate hundreds or thousands of patch cables. When a networked computer is moved from one physical location to a new location within a building, for example, the patch cable leading from the incoming port to the outgoing port connected to the first location is removed from the previous outgoing port and is connected to the new outgoing port connected to the new location. The end of the patch cable which is connected to the unchanged incoming port remains in place.

Patch cables are removed from one port and connected to another port manually by human installers. Due to the presence of hundreds of ports and patch cables in one data centre or patching cabinet, installers lose time searching for a specific patch cable and for the port to which it is to be connected. Human installers sometimes get confused by the large number of ports and patch cables, which frequently results in incorrect connections being made. So-called cable management systems or patch management systems exist to help installers correctly connect corresponding cable ends with corresponding ports. Certain of such systems require both ends of the patch cables to carry cable tags, and the ports to have individual cable tag readers. The cable tags identify the cable ends, the cable tag readers are each associated with specific ports. When a cable end is received in a port, the tag reader of that port reads the cable tag and transmits the content of the cable tag to a patch management device, which records in a database that this specific cable end is connected to that specific port.

In some patch management systems, cable ports are further equipped with port identifiers that an installer can read. When the patch management device receives information that cable end "x" is currently connected to port "y" of the patch panel, it may compare this information about this current patching status of the patch panel with information about a desired or target patching status of the patch panel. If this target patching status requires cable end "x" to be connected to port "z" instead of port "y", the patch management system can indicate to the installer, e.g. via a display on the patch management device, that this cable end "x" should be received by port "z".

Traditionally, patch management devices have often been located next to one array of ports, e.g. the array of "incoming" ports. The array of "outgoing" ports may be located some metres away from the array of "incoming" ports, so that the corresponding patch cables must be several metres long. The international patent application WO 2005/010641 A2, for example, describes a system for managing cabling rooms, where an operator is automatically guided to a communication panel in which changes are to be made to modify the connectivity status. In certain new patching installations where many new patch cables are to connect incoming ports to outgoing ports, the installer would have to walk back and forth between the arrays of ports in order to a) connect one end of the patch cable to an incoming port, b) read from the patch management device the port identifier of the outgoing port assigned to the opposite end of the patch cable, c) walk from the incoming port array to the outgoing port array, d) insert this opposite end of the patch cable into the assigned outgoing port, and e) walk back to the incoming port array and pick up the next patch cable.

In other scenarios the installer may have realized that the far end of the patch cable is currently inserted into an incorrect outgoing port. Traditional patch management systems required the installer to walk to the patch management device, read the information about the correct cable port of the outgoing port array, walk to the outgoing port array and insert the cable into the correct port.

The present disclosure attempts to make installation of new patch cables easier and more cost-effective. It also attempts to reduce the need for the installer to move between two locations, thereby saving installation time.

The present disclosure provides a patch management device for managing cable ports of one or more communications patch panels, in which patch panel(s) each of a plurality of cable ports comprises a visible port identifier, and wherein each patch panel comprises at least one fixed cable tag reader for contactlessly reading a cable tag arranged at a cable end of a patch cable received in a cable port of the patch panel, wherein the patch management device comprises
a) a stationary patch management apparatus, communicatingly connectable to the at least one fixed cable tag reader of each patch panel, and
b) a remote cable tag reader, communicatingly connectable to the stationary patch management apparatus,
characterized in that the remote cable tag reader comprises a display unit and a probe head, operable to contactlessly read cable tags, wherein the patch management device is operable to indicate, via the display unit, a visible port identifier of a target cable port which is to receive the cable end, the cable tag of which cable end has been read by the probe head.

The remote cable tag reader provides an installer with cable tag reading capability and a display at locations remote from the stationary patch management apparatus. An installer can thus read the cable tag at the far end of a first cable, using the probe head, at a distance from the stationary patch management apparatus and read in the display unit into which cable port the tagged cable end is to be inserted, without having to walk to the stationary patch management apparatus. He can then stay in his location and read the cable tag at the far end of a second cable without having to walk back to the stationary patch management apparatus. This saves time in installation and makes patching activities more cost efficient.

The present disclosure is directed to a patch management device that can be used with tagged patch cables, i.e. patch cables that have, on at least one of their two opposite ends, a cable tag that can be read in a contactless manner, also termed a "contactlessly readable cable tag" herein. A cable tag may identify the patch cable to which it is attached. A cable tag may identify the cable end to which it is attached or the cable connector to which it is attached. Contactless reading and contactless readability, as used herein, refers to reading without mechanically contacting the cable tag. Contactless reading thus includes at least wireless reading, such as reading by e.g. RFID, near-field communication ("NFC"), or Bluetooth, and optical reading, such as by 2D or 3D barcode optical reading, optical character recognition ("OCR"), or generally optical pattern recognition ("OPR"). Optical reading includes reading by sensors, such as cameras or barcode readers, that are sensitive at infrared and/or visible and/or ultraviolet wavelengths.

A contactlessly readable cable tag, as used herein, refers to an element that is contactlessly readable, can be attached to a cable end or to a cable connector at one end of a patch cable, and has a size not larger than the size of a typical communication cable connector, such as an RJ45-type communications patch cable plug, i.e. in the range of a few millimetres to less than five centimetres maximum extension in any direction. A contactlessly readable cable tag may thus be a wirelessly readable cable tag, for example, an RFID-readable cable tag ("RFID cable tag"), an NFC-readable cable tag ("NFC cable tag"), or a Bluetooth-readable cable tag ("Bluetooth cable tag"). Alternatively, a contactlessly readable cable tag may be an optically readable cable tag, for example, a 2D barcode-readable cable tag ("2D barcode cable tag"), a 3D barcode-readable cable tag ("3D barcode cable tag"), an OCR-readable cable tag ("OCR cable tag"), or an OPR-readable cable tag ("OPR cable tag").

The present disclosure is directed to a patch management device that can be used with patch panels that have at least one fixed cable tag reader and cable ports equipped with respective visible port identifiers. Generally, visible port identifiers facilitate identification of individual cable ports of patch panels by a human installer. Such visible port identifiers may be, for example, human-readable indicia like, for example, a port number or a port code, or a geometric pattern identifying the port or a lit or flashing LED. Such visible port identifiers are advantageously arranged close to the port opening receiving a patch cable end.

Patch panels that are useable with tagged patch cables comprise at least one fixed cable tag reader. This can be, for example, a single fixed cable tag reader, adapted to contactlessly read a cable tag arranged at a cable end of a patch cable received in any cable port of the patch panel. Such fixed cable tag readers may, for example, be RFID readers, NFC readers, Bluetooth readers, 2D or 3D barcode readers, optical sensors or cameras, such as cameras to perform OCR or OPR When the fixed cable tag reader reads the content of the cable tag, an auxiliary mechanism, e.g. a triangulation mechanism or a sensor in the cable port, may identify the cable port in which the corresponding cable end is received.

Alternatively, a patch panel useable with tagged patch cables may comprise a plurality of fixed cable tag readers. In certain of these patch panels, each of a plurality of cable ports comprises a fixed cable tag reader for contactlessly reading a cable tag arranged at a cable end received in the cable port. Such fixed cable tag readers are suitably adapted, and suitably arranged at the ports to contactlessly read the cable tag of a patch cable when a cable end of the patch cable is inserted into a port. Such fixed cable tag readers may, for example, be RFID readers, NFC readers, Bluetooth readers, 2D or 3D barcode readers, optical sensors or cameras, such as cameras to perform OCR or OPR.

In the context of the present disclosure, such a cable tag reader is referred to as "fixed" if the cable tag reader is permanently secured in a predetermined position on a patch panel, e.g. by a screw, adhesive, a clip or a latch. A cable tag reader may comprise a cable tag reader identifier that uniquely identifies the cable tag reader. A cable tag reader identifier may be a logical cable tag reader identifier or a visible cable tag reader identifier.

Generally, a patch cable, be it a fibre-optic or an electrical patch cable, has a connector, e.g. a plug, at each of its ends for electrical or optical connection to corresponding connectors, e.g. sockets, in cable ports of patch panels. Where this disclosure mentions cable ends of patch cables received in a cable port, this refers to a connector at an end of a patch cable that can engage with a corresponding matching connector in a cable port of a patch panel. A contactlessly readable cable tag may be attached to a connector at the end of a patch cable or integrated into a connector at the end of a patch cable.

Generally, a cable tag on a cable end of a patch cable is contactlessly readable by the remote cable tag reader when the cable end is not received in a cable port, i.e. when the cable end is unconnected. However, depending on the choice of the cable tag and on its arrangement on the cable end, and also potentially depending on the properties of the cable port, the cable tag may also be contactlessly readable by the remote cable tag reader when the cable end is received in a cable port, i.e. when the cable end is connected. The present disclosure addresses both scenarios. Where a cable end has erroneously been connected with an incorrect port, the remote cable tag reader may read the cable tag of that cable end, have the stationary patch management apparatus determine a target cable port for that cable end, and display information indicating a visible port identifier of the target cable port on the display unit of the remote cable tag reader. If the target cable port indicated on the display unit is the cable port to which the cable end is currently connected, the cable end is properly connected and the installer does not need to remove and reconnect it. If, however, the target cable port indicated on the display unit is a different cable port than the one to which the cable end is currently connected, the installer can remove the cable end from the current cable port and connect it to the target cable port indicated on the display unit of the remote cable tag reader.

A patch management device according to the present disclosure comprises a stationary patch management apparatus. In use, such a stationary patch management apparatus gathers and holds information representing the overall patching status of the cable ports to which it is connected. The apparatus may be operable to communicate with the fixed cable tag reader(s) of the patch panel and at least one remote cable tag reader connected to the apparatus. The present disclosure uses the word "communicatingly connected" and "communicatingly connectable" as synonyms for "connected/connectable suitably to be able to communicate." The patch management apparatus, before use, is communicatingly connectable to the fixed cable tag reader of the patch panel, or to a plurality of fixed cable tag readers comprised in cable ports of the patch panel. In use, the apparatus may be communicatingly connected to the fixed cable tag reader of the patch panel, or to a plurality of fixed cable tag readers of the patch panel .

The stationary patch management apparatus may comprise a memory, e.g. digital memory. The memory may represent information on port identifiers of cable ports connected to the apparatus, and/or on port identifiers of cable ports not connected to the apparatus, and/or on a logical link between certain port identifiers and certain fixed cable tag readers, and/or a logical link between certain port identifiers and certain fixed cable tag reader identifiers, and/or on cable tags received in the cable ports connected to the apparatus.

The stationary patch management apparatus is communicatingly connectable, and may be connected, to the fixed cable tag reader of a patch panel, or to a plurality of fixed cable tag readers comprised in respective cable ports of a patch panel. The stationary patch management apparatus may be operable to represent in its memory patch status information about at least one, or each, of the cable ports. The stationary patch management apparatus may represent patch status information in a data storage device comprised in the stationary patch management apparatus. The data storage device may be a database device comprising patch status information in a database structure.

Alternatively, such a data storage device may be separate from the stationary patch management apparatus. Hence, a data storage device, communicatingly connected with the stationary patch management apparatus, may be operable to represent in its memory patch status information about at least one, or each, of the cable ports. The data storage device may be a database device. The database device may comprise patch status information in a database structure.

The stationary patch management apparatus may contain, e.g. in its memory, actual patch status information. Alternatively, actual patch status information may be contained in a data storage device communicatingly connected with the stationary patch management apparatus.

Where each of a plurality of cable ports comprises a fixed cable tag reader, actual patch status information about cable ports may be, or may include, information, if a cable tag of a patch cable is currently readable by the fixed cable tag reader comprised in a specific cable port of the patch panel. Actual patch status information about cable ports may be, or may include, tag identification information, read from a cable tag of a patch cable which is currently readable by the fixed cable tag reader. Actual patch status information may be, or may include, information identifying the cable port in which a tagged cable end is received. In particular, it may include a digital representation of the visible port identifier of the cable port in which the tagged cable end is received.

Where each of a plurality of cable ports comprises a fixed cable tag reader, for unambiguous reading of cable tags it may be preferred that a reading range of a, or each, fixed cable tag reader is limited such that a cable tag is only readable if the cable end, at which the cable tag is arranged, is fully received in the cable port comprising the fixed cable tag reader. This ensures that a fixed cable tag reader can read a cable tag only when the associated cable end is fully received in the cable port, and that other cable tags are not readable.

A digital port identifier may be assigned to a cable port. The digital port identifier may uniquely identify the cable port to which it is assigned. A respective digital port identifier uniquely identifying the respective cable port may be assigned to each cable port. A digital port identifier may comprise information representing the visible port identifier of the cable port to which the digital port identifier is assigned.

Actual patch status information may include a) information comprising a plurality of digital port identifiers of those ports connectable, currently connected or previously connected, to the stationary patch management apparatus, and b) for at least one, or for each, of these digital port identifiers, information about whether any cable tag of a patch cable is currently readable by the fixed cable tag reader comprised in the port identified by the digital port identifier. Should a cable port not receive (i.e. not be connected to) a cable end, tag identification information cannot be read by the fixed cable tag reader comprised in the port identified by the digital port identifier. In this case, a data field for containing the respective tag identification information in the stationary patch management apparatus may be set to a value indicating that the cable port is currently not receiving a cable end. Such actual patch status information may assist a human user in deciding if an end of any patch cable is received in the cable port identified by the digital port identifier, i.e. if this cable port is occupied

Tag identification information may be assigned to a cable end of a patch cable. The tag identification information may be contained in the cable tag arranged at the cable end identified by it, e.g. as digital information. Such tag identification information contained in a cable tag may be readable from the cable tag by a fixed cable tag reader or by the remote cable tag reader.

Actual patch status information may include a) information comprising a plurality of digital port identifiers of those ports connectable, currently connected or previously connected, to the stationary patch management apparatus, and b) for at least one, or for each, of these digital port identifiers, tag identification information read from a cable tag currently readable by the fixed cable tag reader comprised in the port identified by the digital cable port identifier. Should a cable port not receive (i.e. not be connected to) a cable end, tag identification information cannot be read by the fixed cable tag reader comprised in the port identified by the digital port identifier. In this case, a data field for containing the respective tag identification information in the stationary patch management apparatus may be set to a value indicating that the cable port is currently not receiving a cable end. Such actual patch status information may assist a human user in deciding which end of a specific patch cable is received in the cable port identified by the digital cable port identifier.

The stationary patch management apparatus may contain, e.g. in its memory, desired patch status information. Alternatively, desired patch status information may be contained in data storage device communicatingly connected with the stationary patch management apparatus.

Desired patch status information may include a) information comprising a plurality of digital port identifiers of those ports connectable, currently connected or previously connected, to the stationary patch management apparatus, and b) for at least one, or for each, of these digital port identifiers, tag identification information of a cable tag arranged at a cable end which is supposed to be received in the cable port identified by the digital port identifier. Should a cable port not be supposed to receive (i.e. not be supposed to be connected to) a cable end, a data field for containing tag identification information in the stationary patch management apparatus may be set to a value indicating that the cable port is supposed to be unconnected.

The patch management device according to the present disclosure may be operable to determine a target cable port of a tagged cable end by a) reading the tag identification information from the cable tag attached to that cable end, and b) finding, in the desired patch status information, a digital port identifier of a cable port in which this cable end is supposed to be received. The cable port identified by the digital port identifier is the target cable port of the cable end.

A patch management apparatus is referred to herein as a "stationary patch management apparatus" if the apparatus is designed to be operated in the same position for longer periods of time, such as for one or more days, as indicated, for example, by the presence of a power cable for a wall outlet, by the presence of a plurality of cable inputs or cable outputs, which would be time-consuming to disconnect and reconnect, or by the weight or size of the apparatus. "Stationary patch management apparatus" does not refer to a handheld apparatus. In certain embodiments of the present disclosure a stationary patch management apparatus is a base station, arranged in the vicinity of a large number of patch panels, in a fixed rack, to manage the cable ports of these patch panels.

Further to the stationary patch management apparatus, the patch management device according to the present disclosure comprises a remote cable tag reader which is communicatingly connectable, or connected, to the stationary patch management apparatus. This communication connection may be effected in a wireless manner or using a cable, such as an optical or electrical cable, as will be explained below. The connection, wireless or by cable, facilitates transmission of information from the remote cable tag reader to the stationary patch management apparatus, e.g. information read by the remote cable tag reader from cable tags. This connection also facilitates transmission of information from the stationary patch management apparatus to the remote cable tag reader, e.g. information indicating a target cable port in which the cable end, the cable tag of which cable end has been read, or is currently read, by the remote cable tag reader, should be received. The stationary patch management apparatus may transmit, for example, information indicating a visible port identifier of a target cable port to the remote cable tag reader via the said communication connection. This transmission may be done immediately after the remote cable tag reader has contactlessly read a cable tag at the end of a patch cable, or at a later time. Hence the patch management device may be operable to indicate, immediately after the remote cable tag reader has contactlessly read a cable tag, via the display unit, a visible port identifier of a target cable port which is to receive the cable end, the cable tag of which cable end has been read by the probe head.

In certain embodiments this transmission of information indicating a visible port identifier of a target cable port to the remote cable tag reader may be done after reading a cable tag and before reading a subsequent cable tag. Hence the patch management device may be operable to indicate, after reading a cable tag and before reading a subsequent cable tag, via the display unit, a visible port identifier of a target cable port which is to receive the cable end, the cable tag of which cable end has been read by the probe head.

Wireless communication between the stationary patch management apparatus and the remote cable tag reader may be performed via a direct communication link or via an indirect communication link. In an indirect communication link, the remote cable tag reader may transmit information wirelessly to a relay station which transmits it, wirelessly or by wire or optical fibre, to the stationary patch management apparatus. A direct communication link may be a radio link between the stationary patch management apparatus and the remote cable tag reader. An indirect communication link may be a communication link comprising an element of a public mobile phone network. Transmission via an indirect communication link may be, for example, transmission of information from the remote cable tag reader to an element of a public mobile phone network, and via that public mobile phone network to the stationary patch management apparatus.

In order to control the probe head, to receive, to process or to transmit information, the tag reader body may contain a processor and digital memory as well as a receiver or a transmitter.

The remote cable tag reader may be a handheld device. A handheld device is understood to be a device that can easily be carried, moved and operated by one hand. In the context of this disclosure, handheld devices have a weight of less than 500 grams, preferably of less than 250 grams. Many cable tags can only be read when the remote cable tag reader is very close to the cable tag. Handheld remote cable tag readers can be brought very close to a cable tag at an end of a specific patch cable more easily and more quickly, in particular in certain data centres or patching cabinets where space is rare and cluttered, i.e. where access to a specific cable end is difficult.

The remote cable tag reader comprises a display unit. The display unit may comprise a display. The display unit may be operable to display information in human-readable form, e.g. as text or icon or graphic. The displayed information may be recognizable by a human installer. The display unit may, for example, be operable to display information read by the remote cable tag reader from a cable tag. The display unit may, for example, be operable to display a target port identifier, e.g. a target port identifier transmitted from the stationary patch management apparatus, e.g. in human-readable form. The display unit may, for example, be operable to display a visible port identifier of a target port, e.g. a visible port identifier transmitted from the stationary patch management apparatus. After reading a cable tag on a cable end of a patch cable, displaying such information on the display unit of the remote cable tag reader may facilitate guiding the installer towards a cable port, namely the target cable port, in which the end of this patch cable should be received.

In certain embodiments the display unit comprises a display for viewing distances of 10 cm or more. Such a display unit may comprise an LCD display or an LED display or a remote display, such as a display of a "smart watch", wearable at an installer's wrist.

A "remote" display refers to a display that is movable independent from a movement of the probe head. Remote displays may be communicatingly connected with the probe head or the tag reader body by a wireless connection or by a cable connection.

The display unit may alternatively comprise a remote display for viewing distances of less than 10 cm. Such a remote display may be, for example, a wearable display or an optical head-mounted display or so-called "data glasses" or "smart glasses". Such displays are typically worn similarly to how eyeglasses are worn. They may allow to indicate, e.g. to a human installer, a visible port identifier of a target cable port without the installer having to move his head or change his viewing direction.

In other embodiments the display unit comprises a visible indicator. Such a visible indicator may be, for example, a light source, such as a light-emitting diode ("LED"), which indicates by its lit or unlit state information to a human installer. In certain of these other embodiments, the display unit comprises fixed graphic patterns representing cable ports, and a plurality of light sources in this pattern. By switching a light source on, a human installer may receive an indication of the visible port identifier of a target cable port.

The remote cable tag reader comprises a probe head. The probe head is operable to contactlessly read cable tags, such as cable tags arranged at cable ends of patch cables. Where cable tags are RFID cable tags, the probe head may be, or may comprise, an RFID reader. Where cable tags are NFC cable tags, the probe head may be, or may comprise, an NFC reader. Where cable tags are Bluetooth-readable cable tags, the probe head may be, or may comprise, a Bluetooth reader. In order for the probe head to be able to contactlessly read several types of cable tags, a probe head may comprise more than one type of cable tag readers. A probe head may, for example, comprise an RFID reader and a Bluetooth reader. A probe head may, for example, comprise an RFID reader and a camera. Generally, a probe head may comprise an RFID reader and/or an NFC reader and/or a Bluetooth reader.

In order to be able to contactlessly read optically readable cable tags, such as 2D barcodes, 3D barcodes, optically recognizable characters or optically recognizable patterns, the probe head may comprise a 2D barcode reader, a 3D barcode reader, or a camera. The camera may be adapted to capture images for OCR or OPR. In order for a probe head to be able to contactlessly read several types of optically readable cable tags, the probe head may comprise more than one type of cable tag readers. So generally, a probe head may comprise a 2D barcode reader and/or a 3D barcode reader and/or a camera, for contactlessly reading cable tags.

In order for a probe head to be most versatile, it may comprise one or more readers for contactless optical reading and one or more readers for contactless wireless (e.g. RFID, NFC, Bluetooth, and any similar communication standards using electromagnetic radiation of frequencies below 10 GHz) reading of corresponding cable tags. These readers may be readers as mentioned in the preceding paragraphs.

Further to the probe head, the remote cable tag reader may have different functional elements. In certain embodiments, the probe head may comprise a tag reader body. The display unit may be contained in the tag reader body. The display unit may be integrally formed with the tag reader body.

In embodiments where the remote tag reader comprises a tag reader body, the probe head may be separable, or separate, from the tag reader body. A probe head being separable or separate may facilitate guiding of the probe head towards a desired end of a patch cable, while the tag reader body and the display unit can stay in place. Guiding a probe head alone, as opposed to guiding the remote tag reader including the probe head, the display unit and the tag reader body, may make guiding of the probe head towards a desired cable end easier, e.g. in a cluttered or crowded data centre or patching cabinet.

For improved ease of use by a human installer, the remote cable tag reader may have a second display unit. The second display unit may comprise a remote display such as a smart watch, a wearable display or an optical head-mounted display or data glasses or smart glasses. The second display unit may be communicatingly connected to the tag reader body, e.g. by a cable or in a wireless manner.

The second display unit may be operable to display information in human-readable form, e.g. as text or icon or graphic. The displayed information may be recognizable by a human installer. The second display unit may, for example, be operable to display information read by the remote cable tag reader from a cable tag. The second display unit may, for example, be operable to display a target port identifier, e.g. a target port identifier transmitted from the stationary patch management apparatus, e.g. in human-readable form. The second display unit may, for example, be operable to display a visible port identifier of a target port, e.g. a visible port identifier transmitted from the stationary patch management apparatus.

In certain embodiments the second display unit comprises a display for viewing distances of 10 cm or more. Such a second display unit may comprise an LCD display or an LED display or a remote display, such as a display of a "smart watch", wearable at an installer's wrist. The remote display may be communicatingly connected with the probe head or the tag reader body by a wireless connection or by a cable connection.

The second display unit may alternatively comprise a remote display for viewing distances of less than 10 cm. Such a remote display may be, for example, a wearable display or an optical head-mounted display or so-called "data glasses" or "smart glasses".

Where the probe head is separable, or separate, from the tag reader body, the probe head may be communicatingly connected to the tag reader body, such as by a wireless connection or by a wired connection. This connection ensures that information can be transmitted from the probe head to the tag reader body, so that the tag reader body can display it on the display unit and/or transmit it on to the stationary patch management apparatus.

The probe head may alternatively be inseparable from the tag reader body. Also in this case, the probe head may be communicatingly connected to the tag reader body, such as by a wireless connection or by a wired connection or, preferably, by a galvanic connection.

A smaller overall size of the remote cable tag reader may be obtained if the remote cable tag reader comprises a tag reader body, with the probe head being integrated into the tag reader body. Also the display unit may optionally be integrated into the tag reader body. In this latter configuration, the entire remote cable tag reader forms one integrated device, which may be easier to guide towards a specific desired cable end than if the remote cable tag reader were comprised of components separated from each other.

In certain embodiments of the patch management device according to the present disclosure, the remote cable tag reader comprises a tag reader body, and the probe head is inseparable from the tag reader body.

In a cluttered environment, like in a crowded data centre or patching cabinet where space is rare, it is generally desirable that a remote cable tag reader can be easily guided towards a desired end of a patch cable in order to read the cable tag at the end of that patch cable. Where the remote cable tag reader comprises a tag reader body, and where the probe head is inseparable from the tag reader body, an elongate shape of the remote cable tag reader facilitates guiding the remote cable tag reader and the probe head towards the target cable end.

It is actually the probe head which must be in vicinity of a cable tag in order to contactlessly read the cable tag. Where the remote cable tag reader comprises a tag reader body, and where the probe head is inseparable from the tag reader body, arranging the probe head at an end of an elongate remote cable tag reader may thus require less displacement of the entire remote cable tag reader in order to bring the probe head into the required reading distance from the cable tag. This is particularly true if the remote cable tag reader is handled on the opposed end of the elongate cable tag reader. This arrangement may thus allow bringing the probe head sufficiently close to the target cable tag with less effort, quicker and more reliably. Therefore, in certain embodiments of the patch management device of the present disclosure, where the remote cable tag reader comprises a tag reader body, and where the probe head is inseparable from the tag reader body, the remote cable tag reader has an elongate shape forming two opposed end portions, wherein the probe head is arranged at one of the end portions.

In a particularly preferred embodiment, the remote cable tag reader has the shape of a pen having a tip, and the probe head is arranged at a tip of the remote cable tag reader. The tip of the pen refers to an end portion of the elongate pen-shaped remote cable tag reader. The pen-shape helps bringing the probe head into a desired position at a desired cable end, particularly in cluttered space with many cables in the vicinity of the desired cable end.

The cable tag reader is referred to as "remote", because it can be operated at a distance from the stationary patch management apparatus, e.g. at a distance of several metres. A maximum distance is determined by the length of the cable or the range of a wireless communication channel which communicatingly connects the remote cable tag reader with the stationary patch management apparatus. The remote cable tag reader may also be operable in the vicinity of the stationary patch management apparatus.

The remote cable tag reader transmits information to the stationary patch management apparatus and receives information from that apparatus. Information may be exchanged, for example, in the form of signals or data. The communication connection between these two components of the patch management device according to the present disclosure may be a wireless connection. In certain embodiments of the present disclosure, the remote cable tag reader is communicatingly connected to the stationary patch management apparatus in a wireless manner. Alternatively, the communication connection may be a connection via a wire, a fibre-optic cable for transmitting optical signals, or via an electrical cable for transmitting electrical signals. A wireless communication connection between the remote cable tag reader and the stationary patch management apparatus provides greater freedom to an installer to move around in a data centre room or in a patching cabinet without being hindered by a cable.

The remote cable tag reader facilitates reading the cable tags of a patch cable in a location remote from the stationary patch management apparatus. For this reason, and potentially for other uses of the remote cable tag reader, it may be advantageous for the remote cable tag reader to have a user input device. A user input device may be, for example, a button, a keyboard, or a touchscreen. The user, i.e. the installer, may use the user input device to indicate an action or enter additional information that relates to the information read from a cable tag by the probe head. So generally, the remote cable tag reader may comprise an input device for receiving input, such as a command, from an installer.

A wireless communication connection between the remote cable tag reader and the stationary patch management apparatus can be established by customized protocols and custom hardware, or alternatively by standardized network technologies. The use of standardized hardware and standardized protocols, such as Bluetooth, NFC, or WLAN, such as a WLAN connection according to one of the versions of the IEEE 802.11 standard, can render the patch management device more cost-effective because its components may be cheaper and more readily commercially available than customized components. Therefore, in certain embodiments, the remote cable tag reader is communicatingly connected to the stationary patch management apparatus by a Bluetooth connection, by a WLAN connection such as WLAN connection according to IEEE 802.11, or by a near-field communication (NFC) connection.

Alternatively, a wireless communication connection between the remote cable tag reader and the stationary patch management apparatus can be established via standardized public mobile communication networks, such as GSM, mobile data GPRS, UMTS or LTE networks.

The communication connection between these two components of the patch management device according to the present disclosure may alternatively be a cable connection. A cable may be a cable for transmitting optical signals or a cable for transmitting electrical signals, or a cable for transmitting both optical and electrical signals. A cable-based communication connection may be a more reliable connection, e.g. in environments with strong electromagnetic noise. Generally, cable-based communication is easier to protect against eavesdropping, thereby providing a higher level of security. Thus, in certain embodiments of the patch management device according to the present disclosure, the remote cable tag reader is communicatingly connected to the stationary patch management apparatus via a cable for transmitting optical or electrical signals.

Cable tags may be of different types, according to their communication technology. Cable tags may be, for example, of the RFID type, of the NFC type, of the 2D barcode type, of the 3D barcode type, of the OCR type, of the OPR type, or of the Bluetooth type. In certain communications networks, cable tags of patch cables are of a single type, e.g. of the RFID type or of the 2D barcode type. Preferably, the probe head is operable to read the type of cable tags used on the patch cables in the network in which it is used. In other communications networks, a plurality of different types of cable tags may be used on patch cables, e.g. RFID cable tags and 2D barcode cable tags. Advantageously, the probe head is set up such that it can read all types of cable tags that are used in the network in which it is used. Generally, the probe head may be operable to contactlessly read one, two, three, four or more types of cable tags. The probe head may be operable to read RFID type cable tags and/or NFC type cable tags and/or 2D barcode type cable tags and/or 3D barcode type cable tags and/or OCR type cable tags and/or OPR type cable tags and/or Bluetooth type cable tags.

In certain embodiments of the present disclosure, the remote cable tag reader comprises a smartphone, operable in a public mobile telephone network. The smartphone may be communicatingly connected to the stationary patch management apparatus, for example via a built-in Bluetooth functionality or via a built-in WLAN functionality of the smartphone. In some of these embodiments the display unit of the remote cable tag reader is, or comprises, the built-in display of the smartphone.

Where the remote cable tag reader is, or comprises, a smartphone, the probe head may be, or may comprise, an NFC reader and/or an RFID reader and/or a Bluetooth reader. Any of such readers may be either built into the smartphone, or may be a separate module communicatingly connected to the smartphone.

Many smartphones have an integrated, built-in camera. Such a camera can be used to capture an image of optically readable cable tags. Suitable software may be running on the smartphone to process the image of an optically readable cable tag captured by the built-in camera, identify a pattern in the captured image and extract information from that pattern, such as tag identification information, coded in the pattern of the cable tag. The pattern may be, for example, a 2D barcode, a 3D barcode, one or more optically recognizable characters for OCR, or one or more optically recognizable patterns for OPR. Hence, alternatively, the probe head may comprise a built-in camera of the smartphone, such as a front camera or a back camera of the smartphone.

The information read from the cable tag may be transmitted, e.g. via the builtin Bluetooth connectivity of the smartphone, to the stationary patch management apparatus. Alternatively, or in addition, at least a part of the information read from the cable tag may be displayed, e.g. in human-readable form, via the display unit.

The patch management device as described herein can be used advantageously to guide installers towards a target cable port more efficiently. The remote cable tag reader can be kept close to the installer, even when the installer is a few metres away from the stationary patch management apparatus. The installer can therefore read a cable tag of an unconnected cable at a distance from the stationary patch management apparatus, have the stationary patch management apparatus automatically determine a target cable port of this cable end as described above, see identification information about this target cable port on the display unit of the remote cable tag reader without having to walk back to the stationary management apparatus, and connect this cable end to this target cable port.

The present disclosure thus also provides a method of guiding an installer towards a target cable port, comprising the steps of
a) providing a patch management device as described herein and connecting the stationary patch management apparatus communicatingly to fixed cable tag readers of cable ports of one or more communication patch panels;
b) the remote cable tag reader reading a cable tag arranged at a cable end of a patch cable;
c) automatically determining, for the cable end, a target cable port of the one or more communication patch panels;
d) displaying, via the display unit of the remote cable tag reader, information indicating the visible port identifier of the target cable port.

The present disclosure will now be described in more detail with reference to the following figures exemplifying particular embodiments of the disclosure:
- Fig. 1: Functional diagram of a first patch management device according to the present disclosure;
- Fig. 2: Functional diagram of a second patch management device according to the present disclosure;
- Fig. 3: Functional diagram of a third patch management device according to the present disclosure, comprising a smartphone;
- Fig. 4: Functional diagram of a fourth patch management device according to the present disclosure;
- Fig. 5: Functional diagram of a fifth patch management device according to the present disclosure; and
- Fig. 6: Functional diagram of a sixth patch management device according to the present disclosure.

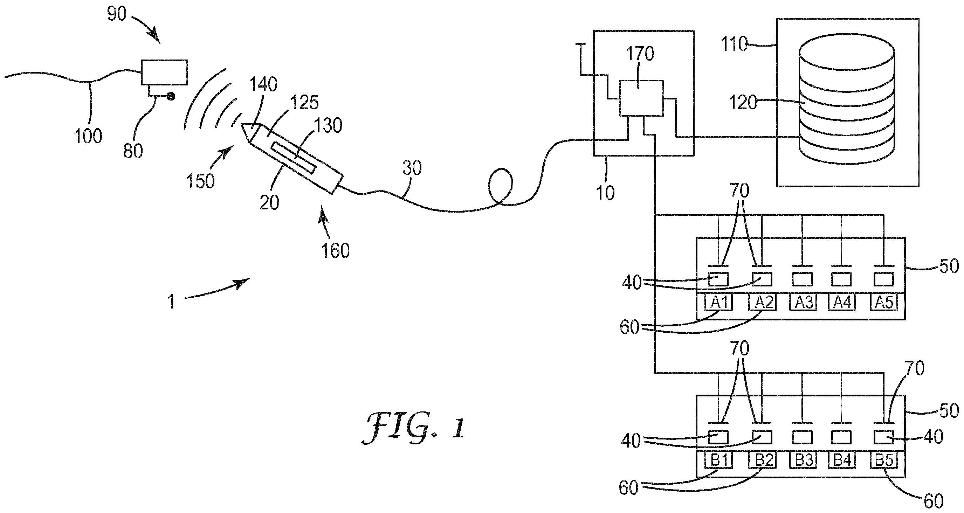

**Figure 1** illustrates a first patch management device 1 according to the present disclosure in a functional diagram. The first patch management device 1 comprises a stationary patch management apparatus 10 and a remote cable tag reader 20 which is communicatingly connected to the stationary patch management apparatus 10 via a cable 30 that can transmit electrical signals. The remote cable tag reader 20 is powered by the stationary patch management apparatus 10 via the cable 30.

The patch management device 1 manages the cable ports 40 of two respective patch panels 50. Each of these cable ports 40 comprises a respective visible port identifier 60 which identifies the port 40 unambiguously to a human installer. In the embodiment shown, the individual ports 40 of the upper patch panel 50 are identified by indicia "A1", "A2", "A3", "A4" and "A5" printed on individual labels which are attached just below the port 40 which they identify, and the individual ports 40 of the lower patch panel 50 are identified by indicia "B1", "B2", "B3", "B4" and "B5".

Each of the cable ports 40 also comprises a respective fixed cable tag reader 70. In the embodiment shown the fixed cable tag readers 70 are RFID readers 70. A fixed cable tag reader 70 of a port 40 can contactlessly read a cable tag 80 arranged at a cable end 90 of a patch cable 100 when the cable end 90 is received in the port 40. A patch cable 100 that can be received in any of the ports 40 is shown in the upper left part of Figure 1. This patch cable 100 has a cable tag 80 arranged at an end 90 of the patch cable 100. In the embodiment shown in Figure 1, the cable tag 80 is an RFID tag 80 that can be read by any of the fixed cable tag readers 70 when the cable end 90 is received in the respective port 40.

In this embodiment, the cable end 90 of the patch cable 100 is formed by a plug 90 that can mate with a corresponding socket (not shown) in a port 40 when the plug 90 is received in the port 40. Once mated, electrical signals can be transmitted through the plug 90 and the socket. The reading range of the fixed tag reader 70 is selected such that the fixed cable tag reader 70 can "see" and read the cable tag 80 on the received cable end 90 only when the plug 90 is fully inserted into the socket, i.e. when the cable end 90 is (fully) received in the port 40. The fixed cable tag readers 70 cannot read a cable tag 80 of a cable end 90 that is not received in the respective port 40. This avoids ambiguity and interference between different cable tags 80.

The stationary patch management apparatus 10 is controlled by a control unit 170 and is communicatingly connected with the fixed cable tag readers 70 of all ports 40. Thereby, the stationary patch management apparatus 10 can receive signals and data from each of the fixed cable tag readers 70, and use the signals and data to determine if a specific port 40 is currently connected to a patch cable 100 (i.e. if a cable end 90 of a patch cable 100 is currently received in the port 40) or not. If the port 40 is connected to a patch cable 100 having a cable tag 80 at its end 90, the fixed cable tag reader 70 of that port 40 can contactlessly read the cable tag 80 and thus also determine to which cable end 90 the port 40 is currently connected.

In the embodiment of Figure 1, the stationary patch management apparatus 10 is connected to a separate database device 110 which contains, in its digital memory, a database 120 which represents, in digital form, information about the actual patch status of the cable ports 40 of the patch panels 50. This is information about each cable port 40 including a digital port identifier of the cable port 40, information whether the port is connected to a cable end 90 or not, and information read from a cable tag 80 of a cable end 90 currently received in the port 40. The stationary patch management apparatus 10 updates the database 120 in regular, preferably short, intervals so that the database 120 reflects the actual patch status of the cable ports 40 of the patch panels 50. Alternatively, the stationary patch management apparatus 10 might update the database 120 whenever an installer requests an update.

While in the embodiment of Figure 1 the database 120 is located in a separate database device 110, the database 120 may alternatively be located in the stationary patch management apparatus 10 itself, as shown below.

The remote cable tag reader 20 is a handheld device having an elongate shape with a first end portion 150 and an opposed second end portion 160. It features a tag reader body 125, a display unit 130 and a probe head 140 which comprises an RFID reader for reading the RFID cable tags 80 of patch cables such as the patch cable 100 shown in Figure 1. The probe head 140 is arranged, inseparable from the tag reader body 125, at the first end portion 150 of the remote cable tag reader 20, so that it can be easily brought into close vicinity of a cable tag 80 in order to read the cable tag 80. Similar to the fixed cable tag readers 70 of the ports 40 of the patch panels 50, the reading range of the probe head 140 is chosen such that the probe head 140 can "see" and read a cable tag 80 on a cable end 90 only when the cable end 90 is in close vicinity, e.g. within a distance of up to a few centimetres, of the probe head 140. This increases the spatial selectivity of the reading and reduces potential ambiguity about which cable tag 80 is currently being read, when several cable ends 90 and cable tags 80 are present.

The cable 30 allows operating the remote cable tag reader 20 at locations remote from the stationary patch management apparatus 10. The cable 30 is typically a few metres of length, so that cable tags 80 can be read that are a few metres away from the stationary patch management apparatus 10. Often, the stationary patch management apparatus 10 will be kept close to the patch panels 50, e.g. in one corner of a data centre room or of a patching cabinet. A cable harness comprising tens of patch cables 100, which may be connected to ports 40 of the patch panels 50, may lead into an opposite corner of the data centre room or patching cabinet, a few metres away from the stationary patch management apparatus 10. The patch management device 1 shown in Figure 1 may now allow reading of cable tags 80 at the remote end of the cable harness, i.e. the end leading into the opposite corner, and displaying information read from any one of those cable tags 80, on the display unit 130 of the remote cable tag reader 20. This makes it unnecessary for an installer to read a cable tag 80 in one corner of the data centre room or of the patching cabinet, then walk to the stationary patch management apparatus 10 to check a display on the stationary patch management apparatus 10 in order to review information read from the cable tag 80.

The display unit 130 of the remote cable tag reader 20 is integrated into the body 125 of the tag reader 20. It is controlled by a control component in the remote cable tag reader 20 which also controls the probe head 140, can store and process data read from a cable tag 80, can store and process data received from the stationary patch management apparatus 10, can control communication with the stationary patch management apparatus 10 via the cable 30 and can write data to, and read data from, the database 120.

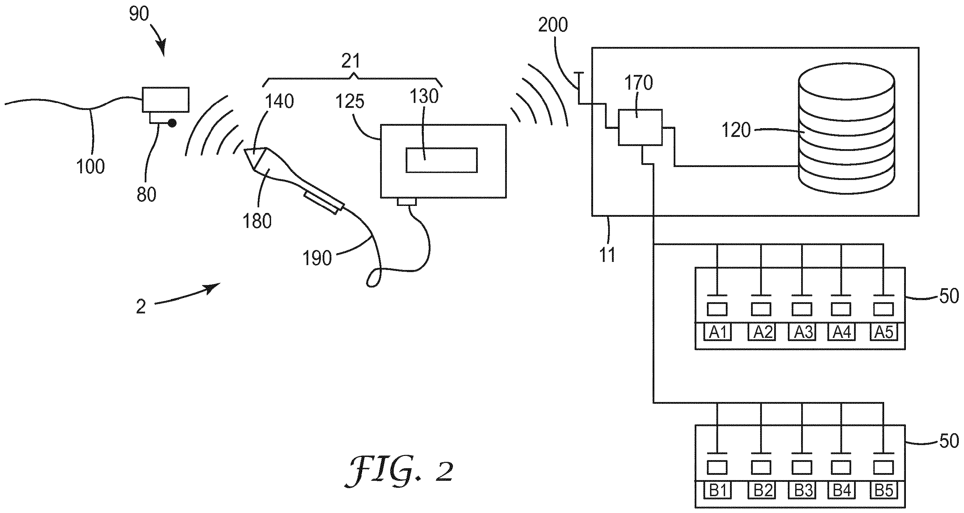

**Figure** 2 illustrates a second patch management device 2 according to this disclosure. It is similar to the first patch management device 1, and identical elements will not be described again.

However, a first difference relative to the first device 1 is that in the remote tag reader 21 of this second device 2, the probe head 140 is separate from the tag reader body 125, allowing the probe head 140 to be moved independently from the body 125 which contains the display unit 130. This, in turn, allows the tag reader body 125 with the display 130 to be kept in a position in which the display unit 130 can be easily read by a human installer, while the probe head 140 can be brought into different positions, e.g. in order to read cable tags 80 at the ends 90 of different patch cables 100. In order to better control the position and orientation of the separate probe head 140, the probe head 140 is mounted on a probe head holder 180. A probe head cable 190 connects the probe head 140 with the remote tag reader body 125 and can transmit signals and data between the probe head 140 and the remote tag reader body 125.

A second difference is that in the second patch management device 2 the remote cable tag reader 21 is connected to, and communicates with, the stationary patch management apparatus 11 in a wireless manner, namely via Bluetooth, in this specific embodiment. For that purpose, the stationary patch management apparatus 11 is equipped with a Bluetooth antenna 200. The Bluetooth connection facilitates a two-way communication between the remote cable tag reader 21 and the stationary patch management apparatus 11 in which signals and data can be transmitted. For example, information read by the probe head 140 from a cable tag 80 can be transmitted to the stationary patch management apparatus 11 via this Bluetooth connection for storage in the database 120. Similarly, information from the database 120 about a target cable port can be transmitted from the stationary patch management apparatus 11 to the remote cable tag reader 21 for display in the display unit 130.

It is a third difference that, in the absence of a cable connection between the remote cable tag reader 21 and the stationary patch management apparatus 11, the remote cable tag reader 21 is powered by batteries.

The fourth difference vis-à-vis the first patch management device 1 is the location of the database 120 in the stationary patch management apparatus 11.

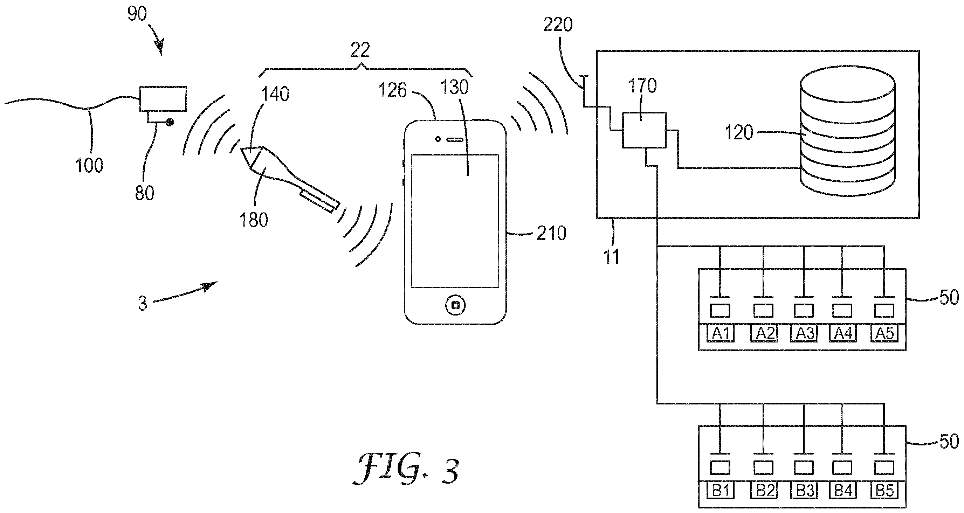

A smartphone can be used as an element of a remote cable tag reader, as is shown in a third patch management device 3 illustrated in **Figure 3****.** The third patch management device 3 is largely similar to the second patch management device 2 shown in Figure 2, and again identical elements will not be described again.

A difference to the second device 2 is that in the third device 3, the remote cable tag reader 22 comprises a commercially available smartphone 210 that can be operated in a public mobile telephone network. In the embodiment of the disclosure shown in Figure 3, the smartphone 210 forms the remote tag reader body 126 of the remote tag reader 22. The regular display of the smartphone 210 forms the display unit 130.

Many common smartphones 210 are handheld devices, equipped with a powerful processing unit, and they are typically provided with various means for wireless and contactless communication. In the embodiment of Figure 3, bi-directional communication between the probe head 140 and the smartphone 210 is performed over a wireless Bluetooth connection. As described above, this communication connection facilitates transmission of information read by the probe head 140 off a cable tag 80 to the smartphone 210, so that this information can be displayed on the display unit 130 of the smartphone 210 and/or can be transmitted further from the smartphone 210 to the stationary patch management apparatus 11. Also, information transmitted from the stationary patch management apparatus 11 to the smartphone 210 can be displayed on the display unit 130, such as a port identifier of a target cable port 40 which is supposed to receive a specific cable end 90.

A further bi-directional communication connection exists between the smartphone 210 and the stationary patch management apparatus 11 for wireless communication, for example via a WLAN ("wireless local area network") connection. Smartphones 210 normally provide WLAN connectivity by default. The stationary patch management apparatus 11 can either be operated as a WLAN router or as a device within a WLAN network, in which the WLAN router is a separate device. In any case, the stationary patch management apparatus 11 has an antenna 220 for wireless communication, which in this embodiment is a WLAN antenna 220.

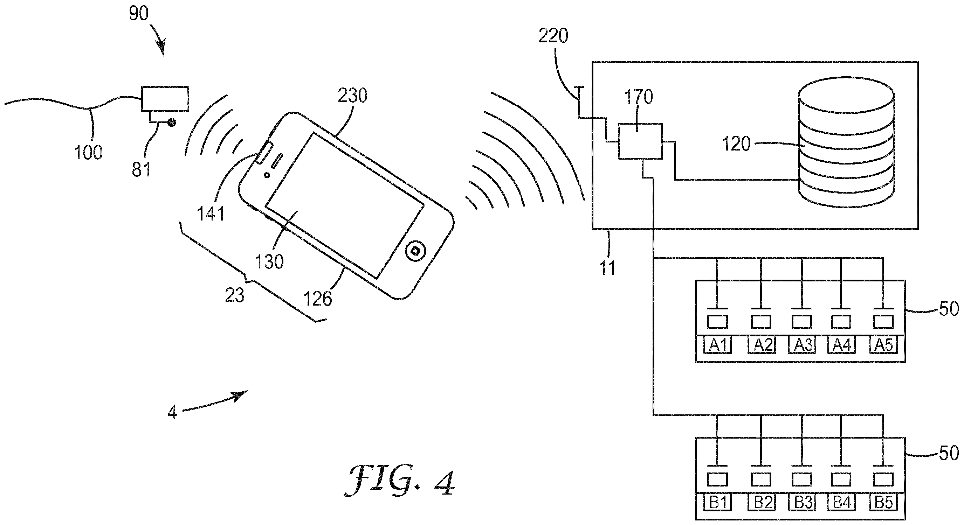

In the embodiment shown in Figure 3 the probe head 140 is separate from the tag reader body 126, i.e. from the smartphone 210. In alternative patch management devices according to the present disclosure, the probe head may be integrated into the tag reader body, i.e. inseparable from the tag reader body. Such an embodiment is illustrated in the functional diagram of **Figure 4****,** which shows a fourth patch management device 4 according to the present disclosure, largely identical to the third patch management device 3, except for the probe head being integrated into the smartphone.

The remote cable tag reader 23 comprises a smartphone 230 having a display unit 130 and an integrated probe head 141, which is operable to read cable tags 81 in a contactless manner. Again, the smartphone 230 forms the remote tag reader body 126 of the remote cable tag reader 23. The cable tag 81 is a passive near-field communication ("NFC") tag 81 which can be read out by a suitable NFC reader. The integrated probe head 141 is an NFC reader that can read passive NFC tags in a contactless manner.

The smartphone 230 is equipped with a standard NFC reader module, integrated into its housing, and suitable software to read, store and process data read via the NFC reader. The smartphone 230 communicates wirelessly with the stationary patch management apparatus 11 via WLAN; as described above for the third patch management device 3.

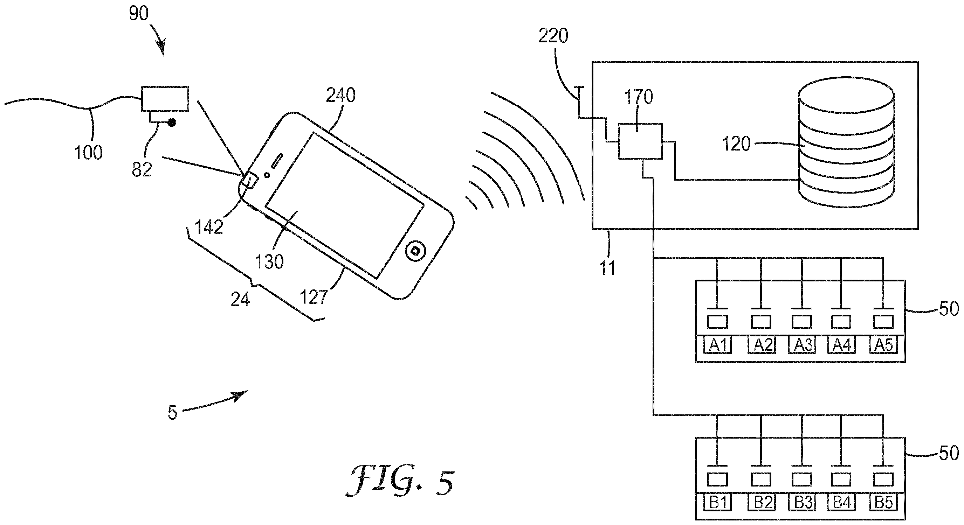

In a yet alternative embodiment of the present disclosure, a cable tag on a cable end of a patch cable comprises indicia that can be optically read in a contactless manner. A fifth patch management device 5, illustrated in the functional diagram of **Figure 5****,** is operable to read such optically readable cable tags, in which the cable tag 82 at a cable end 90 of a patch cable 100 comprises optically readable information such as, for example, a 2D barcode, a 3D barcode, OCR-readable information, or OPR-readable information. In the embodiment shown in Figure 5, the cable tag 82 carries an adhesive label on its exterior surface on which a visible 3D barcode is printed. The 3D barcode represents identification information of the cable tag 82.

Like many common smartphones, the smartphone 240 features a camera 142 which can read the 3D barcode of the cable tag 82 by taking a photo of the cable tag 82. In this embodiment, the camera 142 is the probe head 142 of a remote cable tag reader 24. The remote cable tag reader 24 thus comprises the display unit 130 formed by the regular display of the smartphone 240, the smartphone 240 forming the tag reader body 127, and the smartphone camera 142 forming the probe head 142. The probe head 142 is thus an integrated probe head 142, inseparable from the tag reader body 127.

The smartphone 240 runs software to store and process in its memory an image of the cable tag 82 captured by the camera 142. The software can find and decode the 3D barcode in the image, and extract information from the 3D barcode. As in the previous embodiment, information read from the optically readable cable tag 82 can be displayed on the display unit 130 of the smartphone 240 and can be transmitted wirelessly, over a WLAN connection, directly or indirectly, to the stationary patch management apparatus 11. Similarly, the stationary patch management apparatus 11 can send information, e.g. a port identifier of a target cable port 40, to the remote cable tag reader 24 for display on the display unit 130.

In order to be readable by the fixed cable tag readers 70 of the cable ports 40 of patch panels 50, the cable tag 82 also comprises, beyond the optically readable 3D barcode, a wirelessly readable RFID tag, which can be read by the fixed cable tag readers 70.

In alternative embodiments, in which certain cable tags comprise both an optically readable element and an RFID-readable element, the probe head could comprise both a camera for contactlessly reading optically readable elements and an RFID reader for reading an RFID-readable element on cable tags.

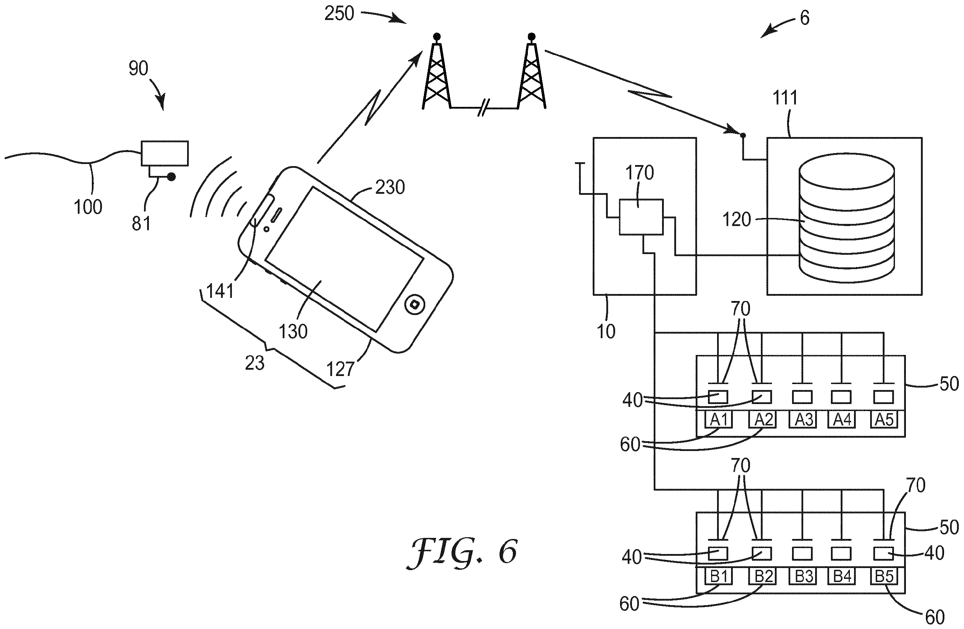

In a further, sixth patch management device according to the present disclosure, illustrated in **Figure 6** in a functional diagram, the remote cable tag reader 23 thus comprises the display unit 130 formed by the regular display of the smartphone 230, the smartphone 230 forming the tag reader body 127, and the smartphone's integrated NFC reader forming the probe head 141. The smartphone 230 uses its built-in mobile phone network connectivity to connect to the database device 111 indirectly via a public mobile phone network 250, i.e. without sending data through the stationary patch management apparatus 10 to the database device 111. All other elements are identical to the ones described above having the same reference numerals. The smartphone 230 establishes a communication connection with the database device 111 via a public GSM network 250. The database device 111 is equipped with a GSM module, so that it can receive and transmit data over the GSM network 250.

Information read by the remote cable tag reader 23 from a cable tag 81 can be processed on the smartphone 230 and sent to the database device 111 for updating the database 120 of patch connections. Similarly, the smartphone 230 can interrogate the database 120 on the database device 111 directly and receive information, for example about a target cable port 40 of the cable tag 81 which is to receive the cable end 90 carrying the cable tag 81 which has been read by the probe head 141, and display information indicating the visible port identifier 60 of the target cable port 40. This configuration may allow the database 120 to reside on a server separate from the stationary patch management apparatus 10. Such a configuration would also be operable when the stationary patch management apparatus 10 is unavailable.

## Claims

1. Patch management device (1, 2, 3, 4, 5) for managing cable ports (40) of one or more communications patch panels (50), in which patch panel(s) each of a plurality of cable ports comprises a visible port identifier (60) and wherein each patch panel comprises at least one fixed cable tag reader (70) for contactlessly reading a cable tag (80, 81, 82) arranged at a cable end (90) of a patch cable (100) received in a cable port of the patch panel,
wherein the patch management device comprises
a) a stationary patch management apparatus (10, 11), communicatingly connectable to the at least one fixed cable tag reader (70) of each patch panel (50), and
b) a remote cable tag reader (20, 21, 22, 23, 24), communicatingly connectable to the stationary patch management apparatus (10, 11),
**characterized in that**
the remote cable tag reader comprises a display unit (130) and a probe head (140, 141, 142), operable to contactlessly read cable tags (80, 81, 82), wherein the patch management device is operable to indicate, via the display unit, a visible port identifier (60) of a target cable port (40) which is to receive the cable end (90), the cable tag of which cable end has been read by the probe head.

2. Patch management device according to claim 1, wherein the remote cable tag reader (20, 21, 22, 23, 24) is a handheld device.

3. Patch management device according to any one of the preceding claims,
wherein the remote cable tag reader (20, 21, 22, 23, 24) is communicatingly connected to the stationary patch management apparatus (10, 11) in a wireless manner.

4. Patch management device according to claim 3, wherein the remote cable tag reader (20, 21, 22, 23, 24) is communicatingly connected to the stationary patch management apparatus (10, 11) by a Bluetooth connection, by a WLAN connection such as WLAN connection according to IEEE 802.11, or by a near-field communication (NFC) connection.

5. Patch management device according to claim 1 or claim 2, wherein the remote cable tag reader (20, 21, 22, 23, 24) is communicatingly connected to the stationary patch management apparatus (10, 11) via a cable (30) for transmitting optical or electrical signals.

6. Patch management device according to any one of the preceding claims,
wherein the remote cable tag reader (20, 21, 22, 23, 24) comprises a tag reader body (125, 126, 127), and wherein the probe head (140, 141, 142) is separable, or separate, from the tag reader body.

7. Patch management device according to any one of the preceding claims,
wherein the remote cable tag reader (20, 21, 22, 23, 24) comprises a second display unit, the second display unit comprising a remote display, such as a smart watch, a wearable display or an optical head-mounted display or data glasses or smart glasses.

8. Patch management device according to any one of claims 1 to 5, wherein the remote cable tag reader (20) comprises a tag reader body (125), and wherein the probe head (140) is inseparable from the tag reader body.

9. Patch management device according to claim 8, wherein the remote cable tag reader (20) has an elongate shape forming two opposed end portions (150, 160), and wherein the probe head (140) is arranged at one of the end portions.

10. Patch management device according to claim 8 or claim 9, wherein the remote cable tag reader (20) has the shape of a pen having a tip, and wherein the probe head (140) is arranged at a tip of the remote cable tag reader.

11. Patch management device according to any one of the preceding claims,
wherein the probe head (140, 141, 142) comprises an RFID reader and/or an NFC reader and/or a Bluetooth reader, for contactlessly reading cable tags (80, 81).

12. Patch management device according to any one of the preceding claims,
wherein the probe head (142) comprises a 2D barcode reader and/or a 3D barcode reader and/or a camera, for contactlessly reading cable tags (82).

13. Patch management device according to any one of the preceding claims,
wherein the tag reader body (126, 127) comprises a smartphone (210, 230, 240), operable in a public mobile telephone network (250).

14. Patch management device according to any one of the preceding claims,
wherein the remote cable tag reader (20, 21, 22, 23, 24) comprises an input device for receiving input from an installer.

15. Method of guiding an installer towards a target cable port, comprising the steps of
a) providing a patch management device according to any one of the preceding claims and connecting the stationary patch management apparatus (10, 11) communicatingly to fixed cable tag readers of cable ports (40) of one or more communication patch panels;
b) the remote cable tag reader (20, 21, 22, 23, 24) reading a cable tag (80, 81, 82) arranged at a cable end of a patch cable;
c) automatically determining, for the cable end, a target cable port (40) of the one or more communication patch panels;
d) displaying, via the display unit of the remote cable tag reader, information indicating the visible port identifier (60) of the target cable port (40).
